# FASCICULE DE BREVET EUROPEEN

(11) **EP 0 707 728 B1**
(45) Date de publication et mention de la délivrance du brevet: **12.12.2001**
(21) Numéro de dépôt: 95919469.7
(22) Date de dépôt: 03.05.1995
(51) Int. Cl.: G06K 19/16

(54) **PROCEDE DE MARQUAGE DE PRODUITS OU DE DOCUMENTS, PRODUIT AINSI MARQUE ET MOYENS POUR LA MISE EN UVRE DU PROCEDE ET UN DISPOSITIF DE VERIFICATION D'UN TEL PRODUIT OU DOCUMENT**
VERFAHREN ZUR MARKIERUNG VON PRODUKTEN ODER DOKUMENTEN, PRODUKT AUF DIESE WEISE MARKIERT UND MITTELN ZUR DURCHFÜHRUNG DIESES VERFAHRENS UND EINE FEHLERPRÜFUNGSVORRICHTUNG
METHOD FOR MARKING ARTICLES OR DOCUMENTS, RESULTING MARKED ARTICLE, SYSTEM FOR CARRYING OUT THE METHOD, AND DEVICE FOR CHECKING SUCH AN ARTICLE OR DOCUMENT

(30) Priorité: 04.05.1994 FR 9405472
(43) Date de publication de la demande: 24.04.1996
(73) Titulaire: HOLOGRAM INDUSTRIES S.A.R.L., 94120 Fontenay-sous-Bois (FR)
(72) Inventeur: DANIEL, Françoise, F-75012 Paris (FR); SOUPARIS, Huges, F-75020 Paris (FR)
(74) Mandataire: Pernez, Helga
(86) Numéro de dépôt international: FR9500574
(87) Numéro de publication internationale: WO9530967

(56) Documents cités:
- EP-A- 0 101 939
- EP-A- 0 328 086
- EP-A- 0 512 925
- WO-A-91/06925
- GB-A- 2 117 133
- US-A- 4 119 361
- US-A- 4 211 918

## Description

La présente invention concerne un procédé de marquage de documents ou de produits mettant en oeuvre des marqueurs optiques tels que des réseaux diffractants, par exemple des hologrammes.

On connaît dans l'état de la technique le brevet WO-A-9106925 décrivant un dispositif optique de sécurité utilisé sur un article de sécurité comprend un certain nombre de couches comportant une couche de diffraction optique, ainsi qu'au moins une couche partiellement réfléchissante, lesquelles produisent ensemble une première image. Une seconde image non optiquement diffractante, est ménagée à l'intérieur du dispositif, en association avec la première image.

Le brevet américain US4119361 expose un moyen de marquage et de sécurisation d'un produit comportant une couche réflective transparente estampée et une couche opaque dans le visible.

Le brevet européen EP328086 décrit des hologrammes non continus.

L'objet de la présente invention est de remédier à cet inconvénient en proposant un procédé de marquage de sécurité plus sûr.

A cet effet, l'invention concerne tout d'abord un procédé de marquage de documents conforme à la revendication 1.

Le moyen d'authentification est constitué par un marqueur optique diffractant. On entendra par marqueur optique diffractant au sens du présent brevet un moyen diffractant dont le comportement optique, lorsqu'il est éclairé par un faisceau monochromatique, est spécifique. En particulier, on considérera qu'un réseau diffractant ou un hologramme constituent des "marqueurs optiques" diffractants qui, suivant le degré de complexité, formeront en réponse à un éclairage monochromatique un ensemble de points lumineux, des lignes lumineuses ou, dans le cas de l'hologramme, une image.

Le moyen d'identification est par exemple réalisé par impression avec une encre, notamment une encre transparente dans le visible et opaque dans l'infrarouge.

Le moyen d'identification est masqué à la vision et de ce fait ne permet pas une reproduction par des moyens accessibles au grand public, tels qu'une photocopieuse. La sécurité du produit ou du document est ainsi renforcée.

Selon une première variante, on imprime sur le substrat le moyen d'identification, on recouvre de manière indissociable sans destruction la zone ainsi imprimée avec un ensemble multicouche comprenant la couche de vernis sélectif en longueur d'onde formant une couche inférieure laissant passer au moins une bande de longueur d'onde étroite pour l'éclairage du moyen d'identification et une couche réflective transparente formant le marqueur optique diffractant.

Selon une deuxième variante, on fixe de manière indissociable sans destruction sur le substrat un ensemble multicouche comprenant une couche inférieure portant une zone imprimée constituant le moyen d'identification, la couche de vernis sélectif en longueur d'onde laissant passer au moins une bande de longueur d'onde étroite pour l'éclairage du moyen d'identification et une couche réflective transparente formant le marqueur optique diffractant.

Selon une variante préférée, la couche de vernis sélectif en longueur d'onde est transparente dans l'infrarouge et le moyen d'identification est déterminé pour être corrélé avec la figure de diffraction formée par la couche réflective transparente.

Le produit marqué selon le procédé de l'invention ne permet pas de modifier l'information sans altérer le moyen de contrôle de l'authenticité du document.

Il est par ailleurs possible de juxtaposer plusieurs marqueurs optiques.

L'invention concerne également un document sécurisé comportant un moyen d'identification et un moyen d'authentification, caractérisé en ce que le document présente en superposition indissociable sans destruction :
- une zone imprimée formant le moyen d'identification propre à être lu par réflexion dans une première bande de longueur d'onde ;
- une couche de vernis sélectif en longueur d'onde, opaque dans le spectre visible, recouvrant la zone imprimée formant le moyen d'identification, ladite couche de vernis sélectif en longueur d'onde présentant une fenêtre de transmission dans l'invisible comprenant ladite première bande de longueur d'onde ; et
- une couche réflective transparente estampée, formant un marqueur optique diffractant recouvrant la couche de vernis, le moyen d'authentification étant formé par ladite couche réflective transparente estampée.

L'invention concerne encore un moyen de marquage et de sécurisation d'un produit ou d'un document caractérisé en ce que ledit moyen est constitué par un ensemble multicouche comprenant une première couche réflective transparente estampée formant un moyen d'authentification, et une seconde couche inférieure à ladite première couche, ladite seconde couche étant une couche de vernis sélectif en longueur d'onde opaque dans le visible, laissant passer une bande passante étroite dans l'invisible et une troisième couche, inférieure à la seconde couche, ladite troisième couche portant une zone imprimée formant un moyen d'identification.

Selon une variante, le moyen de marquage et de sécurisation comporte en outre une couche d'adhésif inférieure permettant un collage irréversible sur le produit à marquer.

Selon une variante, le moyen de marquage et de sécurisation comporte en outre :
- une couche supérieure formée par un film support transparent ;
- une couche de détachement permettant la séparation du film support de la partie active ;
- un vernis de protection transparent sur l'ensemble du spectre recouvrant la couche réflective.

La couche de détachement est de préférence inhomogène et présente des zones à haut pouvoir d'adhérence et des zones à faible pouvoir d'adhérence.

Selon une première variante, le moyen de marquage et de sécurisation d'un produit est réalisé sous forme de bande multicouche propre à être déposée en continu par déroulement d'une bobine et par apposition sur le produit à marquer par collage ou par transfert à chaud.

Selon une deuxième variante, le moyen de marquage et de sécurisation d'un produit est réalisé sous forme d'un fil propre à être inséré dans le papier par tissage ou par collage.

L'invention concerne également un dispositif pour la vérification d'un produit marqué conformément au procédé caractérisé en ce que le dispositif comporte une série de sources de lumière illuminant le complexe optique selon une ou plusieurs incidences, une barrette de CCD ou une série de récepteurs ponctuels pour analyser la réponse du moyen d'authentification, une source d'éclairage fonctionnant dans la bande passante de la couche de vernis sélectif en longueur d'onde séparant le moyen d'identification et le moyen d'authentification, un moyen de lecture du moyen d'identification et un calculateur pour l'exploitation des signaux.

Selon une variante, le dispositif pour la vérification d'un produit marqué comporte un moyen d'éclairage constitué par une pluralité de sources lumineuses inclinées selon au moins deux angles différents par rapport à la normale du substrat.

L'invention sera mieux comprise à la lecture de la description qui suit, faisant référence aux dessins annexés concernant des exemples non limitatifs de réalisation, où:
- la figure 1 représente une vue schématique d'une première variante de réalisation d'un document marqué selon l'invention ;
- la figure 2 représente une vue en coupe du complexe optique selon cette première variante ;
- la figure 3 représente une vue schématique d'une deuxième variante de réalisation d'un document marqué selon l'invention ;
- la figure 4 représente une vue en coupe du complexe optique selon cette deuxième variante ;
- les figures 5 à 8 représentent des vues schématiques de la lecture de l'authentifiant selon deux configurations différentes ;
- la figure 9 représente une vue schématique d'un équipement de lecture de l'authentifiant.

Le procédé selon l'invention consiste à associer définitivement, par différentes formes de réalisation, un moyen qui sera désigné dans ce qui suit par "identifiant" et un moyen désigné dans ce qui suit par "authentifiant", pour former un complexe optique indissociable sans destruction.

L'identifiant est par exemple un code à barres ou une série de caractères, de préférence pouvant être interprétés par un système optique de lecture de caractères (O.C.R.), ou encore une photographie. Il permet de réaliser un nombre de combinaisons déterminées par le type de marquage requis. Elles peuvent être déterminées de façon à permettre une identification automatique avec un lecteur dont le fonctionnement général est celui des lecteurs de codes-barres ou de reconnaissance optique de caractères de l'art antérieur, ou une caméra infra-rouge dans le cas d'une photographie.

L'authentifiant est constitué par une figure d'interférence communément appelée "hologramme", formant une partie indissociable du complexe optique, qui est lu par diffraction de lumière incidente. Il peut reproduire une image non signifiante, ou encore comporter une partie de l'information nécessaire à l'identification du produit.

Suivant les variantes de réalisation, les figures de diffraction sont constituées par :
- un ensemble de points distincts dont les caractéristiques géométriques sont définies par rapport à la position de la source et par rapport à la position théorique du document ;
- un ensemble de lignes ou de barres distinctes ;
- un ensemble de points dessinant un contour ou une image.

La séparation de l'identifiant et de l'authentifiant est assurée par un vernis sélectif en longueur d'onde, et par l'emploi pour la lecture de chacun des deux éléments de longueurs d'ondes distinctes. Le vernis est opaque dans le spectre visible et transparent dans l'infrarouge.

Eventuellement chacun des éléments porte une partie de l'information, l'identification complète étant alors réalisée par la lecture de l'information invisible en lumière réfléchie et la lecture de l'information visible en lumière diffractée dans une deuxième bande de longueur d'onde, et/ou vérification de la corrélation de l'information codée par l'identifiant et l'information codée par l'authentifiant.

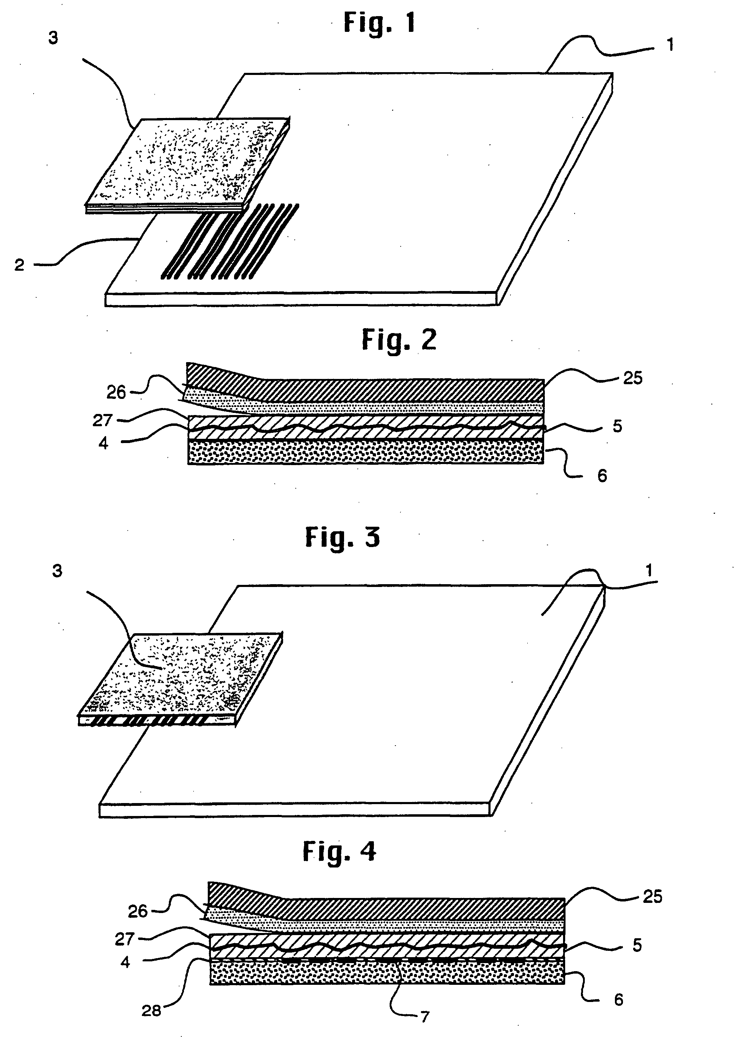

La figure 1 représente une vue d'un premier exemple de réalisation.

Le produit à marquer présente une zone imprimée (2) portant des codes-barres d'identification. Cette zone est revêtue par un ensemble multicouches (3) constitué par une étiquette pouvant être solidarisée avec un produit par collage ou par transfert à chaud dont la figure 2 représente une vue en coupe agrandie.

Cet ensemble multicouches (3) est constitué par :
- un film support (25), par exemple un film polyester transparent. Ce film support (25) permet de transférer le complexe optique sur le document ou le produit à marquer et à authentifier ;
- une couche de détachement (26) permettant la séparation du film support (25) de la partie active de l'étiquette ;
- un vernis de protection (27) transparent sur l'ensemble du spectre ;
- une couche réflective transparente estampée (4). Cette couche est rendue réflective par métallisation ou par vaporisation d'une couche additionnelle formée par un matériau diélectrique ou encore par un vernis d'indice de réfraction différent de celui du vernis de protection (27) ; cette couche porte l'image d'authentification par déformation de sa surface ;
- une couche de vernis sélectif en longueur d'onde (5) coloré dans le visible, laissant passer une bande passante étroite dans l'invisible, par exemple dans le domaine des infrarouges ; Cette couche de vernis en longueur d'onde (5) coloré est opaque dans le spectre visible.
- une couche d'adhésif (6) dont les caractéristiques sont adaptées au support. Il s'agit par exemple d'un adhésif réactivable à chaud.

La couche réflective transparente estampée (4) est déformée par estampage à l'aide d'une matrice comportant des informations optiques sous forme de micro-reliefs.

Une variante consiste à prévoir une couche de détachement (26) irrégulière, présentant des zones de fort pouvoir adhésif et des zones de faible pouvoir adhésif. Lorsque l'on exerce une traction sur le film support (25), les parties actives se trouvant sous l'adhésif fort sont arrachées du substrat (1), alors que les parties actives se trouvant sous l'adhésif faible restent fixées sur le substrat (1), et forment un ensemble de taches ou un ensemble signifiant permettant de détecter une tentative de fraude par arrachement de l'étiquette d'authentification.

Les figures 3 et 4 représentent une variante de réalisation de l'ensemble multicouches (3).

Selon cette variante, l'ensemble multicouches forme une étiquette intégrant la zone imprimée (7) formant par exemple un code-barres L'impression est réalisée avec une encre d'imprimerie classique, ou avec une encre transparente dans le visible et opaque seulement dans les infrarouges. L'identifiant (7) et l'authentifiant (4) sont séparés par la couche de vernis (5) opaque dans le visible et transparent dans l'infrarouge.

Dans les deux cas, l'ensemble optique multicouches (3) est déposé sur le substrat (1) soit à froid, soit par laminage à chaud, soit par transfert thermique.

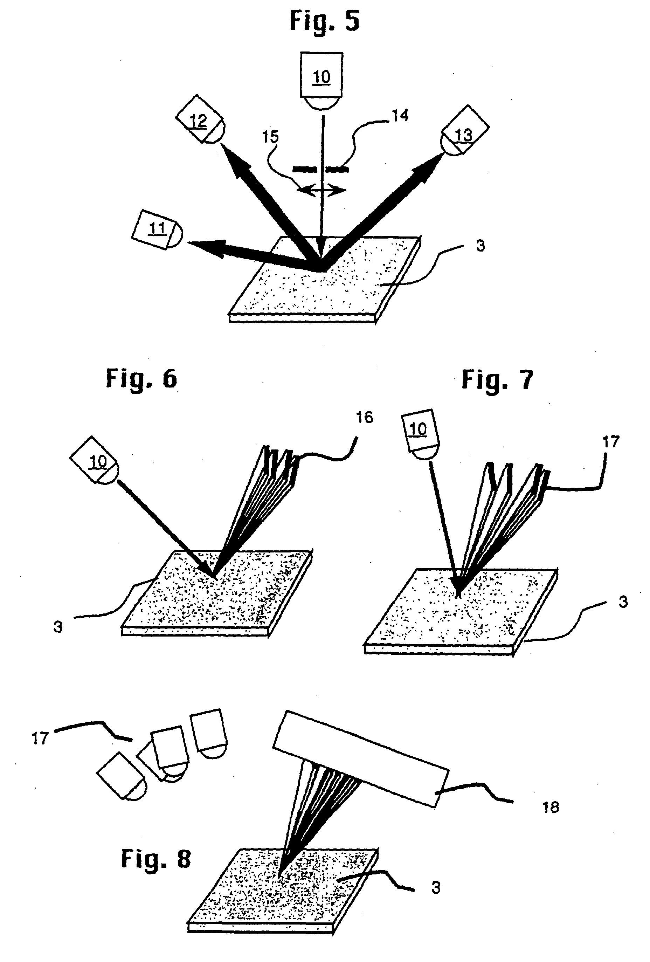

La figure 5 représente une vue schématique d'un équipement de lecture de l'authentifiant, dans une variante selon laquelle le réseau diffractant restitue une image correspondant à un ensemble de taches. Les techniques de réalisation d'un réseau de diffraction estampé ou d'une image holographique estampée sont connues de l'homme de métier et ne seront pas développées dans le cadre du présent brevet.

L'équipement de lecture comporte une source de lumière, par exemple une diode électroluminescente (10), éclairant l'ensemble optique multicouches (3) selon un angle d'incidence déterminé, l'angle d'incidence étant défini par rapport à la normale au plan du réseau diffractant. Une pupille (14) et une optique de focalisation (15) sont disposées sur le trajet optique pour former un faisceau d'illumination éclairant le réseau diffractant de manière ponctuelle.

Un ensemble de capteurs (11 à 13) détecte la lumière diffractée par le réseau l'ensemble multicouches (3). La concordance entre les points lumineux détectés et la figure de diffraction mémorisée dans un calculateur permet de vérifier l'authenticité du document marqué. Éventuellement, l'identifiant peut être codé en fonction des informations provenant de la figure de diffraction, et varier ainsi d'un document à l'autre en fonction d'une fonction de codage secrète, mémorisée dans l'équipement de vérification sous forme d'un algorithme de comparaison entre les signaux provenant des photodétecteurs et l'image calculée en fonction des informations provenant de l'identifiant et dudit algorithme.

Les figures 6 à 7 représentent des vues schématiques de la lecture de l'authentifiant selon deux configurations différentes, selon une variante dans laquelle la figure diffractée correspond à des codes-barres.

La figure 6 et la figure 7 représentent une vue schématique du résultat de l'illumination du complexe optique (3) par une source lumineuse (10) selon deux angles d'incidence différents. La particularité de certains réseaux diffractants est de produire une figure diffractée qui dépend de l'angle d'incidence. Suivant l'angle d'incidence représenté en figure 6, ou en figure 7, le résultat correspondra à un premier code-barres (16) ou à un second code-barres (17).

Le dispositif de lecture représenté en figure 8 comporte une rampe de diodes électroluminescentes (17) comportant une première série de diodes électroluminescentes orientés suivant un premier angle d'incidence par rapport à la normale au substrat, par exemple de +45 degrés par rapport à la normale, et une deuxième série de diodes électroluminescentes orientés suivant un deuxième angle différent, de -45 degrés par rapport à la normale.

Le dispositif de lecture comporte un capteur C.C.D. (18) détectant la figure diffractée, et générant un signal propre à être exploité par un microcalculateur pour vérifier la concordance entre la figure diffractée et la figure de référence mémorisée ou l'identifiant.

Dans l'exemple décrit en référence aux figures 6 à 8, l'image diffractée correspond à un code-barres. Il est bien entendu possible d'enregistrer tout type de réseau dans le complexe optique, pour diffracter des images correspondant à des textes, des caractères ou des informations graphiques, reconnaissable automatiquement par un équipement optronique, ou par une vérification visuelle par un opérateur.

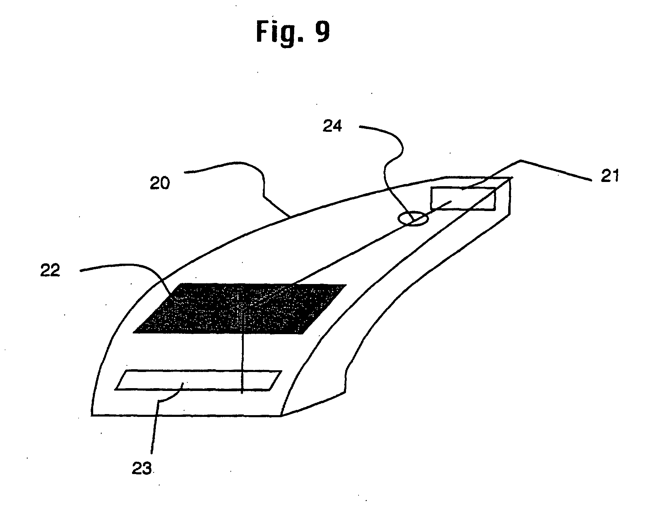

La figure 9 représente un exemple d'un lecteur, sous la forme d'un appareil portable présentant un boîtier (20) en forme de "douchette", renfermant à sa partie arrière une barrette de capteur CCD (21), et à sa partie avant une barrette (23) portant un ensemble de diodes électroluminescentes orientées selon des angles formant respectivement + 45 et - 45 degrés par rapport à la normale d'une fenêtre s'ouvrant à la partie inférieure du boîtier.

Des moyens optiques de focalisation (24) sont prévus pour former sur la barrette à transfert de charges C.C.D. (21) l'image diffractée par le réseau diffractant disposé contre la fenêtre prévue sur la partie inférieure du boîtier, après réflexion sur un miroir (22).

Le mode de réalisation d'un lecteur pour la lecture et la vérification d'un document marqué avec un complexe optique précédemment décrit consiste à réunir dans un boîtier des moyens pour la reconnaissance des informations de l'identifiant d'une part, et des moyens pour la vérification de l'authentifiant.

Un tel appareil de lecture comporte :
- une série de diodes laser illuminant le complexe optique selon une ou plusieurs incidences ;
- une matrice ou une barrette de CCD ou une série de récepteurs ponctuels pour analyser la réponse de l'authentifiant ;
- un lecteur spécifique de l'identifiant, fonctionnant dans la bande de longueur d'ondes propre à l'identifiant, par exemple l'infrarouge ;
- un calculateur pour l'exploitation des signaux
- et des interfaces de sortie, par exemple un afficheur ou une sortie RS-232 pour la connexion à un périphérique.

L'invention est décrite dans ce qui précède à titre d'exemple non limitatif. Il est bien entendu que l'homme de Métier sera à même de réaliser différentes variantes sans pour autant sortir du cadre de l'invention.

## Revendications

1. Procédé de marquage de produits ou de documents consistant à apposer sur un substrat (1) un complexe optique multicouche indissociable sans destruction, ledit complexe multicouche comportant un moyen d'authentification constitué par un marqueur optique diffractant et un moyen d'identification (2, 7) **caractérisé en ce que** les deux moyens sont séparés par une couche de vernis sélectif en longueur d'onde (5) coloré laissant passer une bande passante étroite dans l'invisible, cette couche de vernis sélectif (5) étant opaque dans le spectre visible.

2. Procédé de marquage de produits ou de documents selon la revendication 1 **caractérisé en ce que** l'on imprime sur le substrat (1) le moyen d'identification (2), **en ce que** l'on recouvre de manière indissociable sans destruction la zone ainsi imprimée avec un ensemble multicouche (3) comprenant la couche de vernis sélectif en longueur d'onde (5) formant une couche inférieure laissant passer au moins une bande de longueur d'onde étroite pour l'éclairage du moyen d'identification (2) et une couche réflective transparente (4) formant le marqueur optique diffractant.

3. Procédé de marquage de produits ou de documents selon la revendication 1 **caractérisé en ce que** l'on fixe de manière indissociable sans destruction sur le substrat (1) un ensemble multicouche comprenant une couche inférieure (28) portant une zone imprimée constituant le moyen d'identification (7), la couche de vernis sélectif en longueur d'onde (5) laissant passer au moins une bande de longueur d'onde étroite pour l'éclairage du moyen d'identification (7) et une couche réflective transparente (4) formant le marqueur optique diffractant.

4. Procédé de marquage selon l'une quelconque des revendications 2 à 3 **caractérisé en ce que** la couche de vernis sélectif en longueur d'onde (5) est transparente dans l'infrarouge et **en ce que** le moyen d'identification (2, 7) est déterminé pour être corrélé avec la figure de diffraction formée par la couche réflective transparente (4).

5. Document sécurisé comportant un moyen d'identification et un moyen d'authentification, **caractérisé en ce que** le document présente en superposition indissociable sans destruction :
- une zone imprimée formant le moyen d'identification (2, 7) propre à être lu par réflexion dans une première bande de longueur d'onde ;
- une couche de vernis sélectif en longueur d'onde (5), opaque dans le spectre visible, recouvrant la zone imprimée formant le moyen d'identification (2, 7), ladite couche de vernis sélectif en longueur d'onde (5) présentant une fenêtre de transmission dans l'invisible comprenant ladite première bande de longueur d'onde ; et
- une couche réflective transparente estampée (4), formant un marqueur optique diffractant recouvrant la couche de vernis, le moyen d'authentification étant formé par ladite couche réflective transparente estampée (4).

6. Moyen de marquage et de sécurisation d'un produit ou d'un document **caractérisé en ce que** ledit moyen est constitué par un ensemble multicouche (3) comprenant une première couche réflective transparente estampée (4) formant un moyen d'authentification, et une seconde couche inférieure à ladite première couche, ladite seconde couche étant une couche de vernis sélectif en longueur d'onde (5) opaque dans le visible, laissant passer une bande passante étroite dans l'invisible et une troisième couche, inférieure à la seconde couche, ladite troisième couche portant une zone imprimée formant un moyen d'identification (7).

7. Moyen de marquage et de sécurisation d'un produit selon la revendication 6 **caractérisé en ce qu'**il comporte en outre une couche d'adhésif (6) inférieure permettant un collage irréversible sur le produit à marquer.

8. Moyen de marquage et de sécurisation d'un produit selon l'une quelconque des revendications 6 ou 7 **caractérisé en ce qu'**il comporte en outre :
- une couche supérieure formée par un film support (25) transparent ;
- une couche de détachement (26) permettant la séparation du film support (25) de la partie active ;
- un vernis de protection (27) transparent sur l'ensemble du spectre recouvrant la couche réflective (4).

9. Moyen de marquage et de sécurisation d'un produit selon la revendication 8 **caractérisé en ce que** la couche de détachement (26) est inhomogène et présente des zones à haut pouvoir d'adhérence et des zones à faible pouvoir d'adhérence.

10. Moyen de marquage et de sécurisation d'un produit selon l'une quelconque des revendications 6 à 8 **caractérisé en ce qu'**il est réalisé sous forme de bande multicouche (3) propre à être déposée en continu par déroulement d'une bobine et par apposition sur le produit à marquer par collage ou par transfert à chaud.

11. Moyen de marquage et de sécurisation d'un produit selon l'une quelconque des revendications 6 à 8 **caractérisé en ce qu'**il est réalisé sous forme d'un fil propre à être inséré dans le papier par tissage ou par collage.

12. Dispositif pour la vérification d'un produit marqué conformément au procédé selon l'une quelconque des revendications 1 à 4 **caractérisé en ce que** le dispositif comporte une série de sources de lumière illuminant le , complexe optique selon une ou plusieurs incidences, une barrette de CCD ou une série de récepteurs ponctuels pour analyser la réponse du moyen d'authentification, une source d'éclairage fonctionnant dans la bande passante de la couche de vernis sélectif en longueur d'onde (5) séparant le moyen d'identification (2, 7) et le moyen d'authentification, un moyen de lecture du moyen d'identification (2, 7) et un calculateur pour l'exploitation des signaux.

13. Dispositif pour la vérification d'un produit marqué selon la revendication 12 **caractérisé en ce qu'**il comporte un moyen d'éclairage constitué par une pluralité de sources lumineuses inclinées selon au moins deux angles différents par rapport à la normale du substrat.

## Patentansprüche

1. Verfahren zur Markierung von Produkten oder Dokumenten, darin bestehend, dass auf einen Chip (1) ein optischer, mehrschichtiger, nicht zerstörungsfrei trennbarer Verbund aufgetragen wird, wobei sich in dem mehrschichtigen Verbund ein Authentifikationsmittel befindet, das aus einer optischen, diffraktiven Markierung und einem Identifikationsmittel (2, 7) besteht, **dadurch gekennzeichnet, dass** die beiden Mittel durch eine farbige, wellenlängenselektive Lackschicht (5) getrennt sind, und durch die im unsichtbaren Bereich ein schmales Magnetband verläuft, wobei diese selektive Lackschicht (5) im sichtbaren Spektrum undurchsichtig ist.

2. Verfahren zur Markierung von Produkten oder Dokumenten nach Anspruch 1, **dadurch gekennzeichnet, dass** man auf den Chip (1) das Identifikationsmittel (2) druckt, und dass man die derart bedruckte Zone nicht zerstörungsfrei trennbar mit einer mehrschichtigen Einheit (3) überdeckt, die aus der wellenlängen-selektiven Lackschicht (5) besteht, welche eine untere Schicht bildet, und durch die mindestens ein schmales Wellenlängenband für die Beleuchtung des Identifikationsmittels (2) verläuft, sowie eine reflektive, transparente Schicht (4), welche die diffraktive, optische Markierung bildet.

3. Verfahren zur Markierung von Produkten oder Dokumenten nach Anspruch 1, **dadurch gekennzeichnet, dass** man auf einen Chip (1) in nicht zerstörungsfrei trennbarer Weise eine vielschichtige Einheit aufbringt, die aus einer unteren Schicht (28) mit einer bedruckten Zone besteht, die das Identifikationsmittel (7) bildet, aus der wellenlängenselektiven Lackschicht (5), durch die mindestens ein schmales Wellenlängenband für die Beleuchtung des Identifikationsmittels (7) verläuft, sowie aus einer reflektiven, transparenten Schicht (4), die die diffraktive, optische Markierung bildet.

4. Verfahren zur Markierung von Produkten oder Dokumenten nach einem der Ansprüche 2 bis 3, **dadurch gekennzeichnet, dass** die wellenlängenselektive Lackschicht (5) im Infrarotlicht transparent ist, und dadurch, dass das Identifikationsmittel (2, 7) so beschaffen ist, dass es mit dem durch die reflektive, transparente Schicht (4) gebildeten Diffraktionsbild korreliert ist.

5. Gesichertes Dokument mit einem Idenfikationsmittel und einem Authentifikationsmittel, **dadurch gekennzeichnet, dass** das Dokument übereinander in nicht zerstörungsfrei trennbarer Weise aufweist:
- eine bedruckte Zone, die das Identifikationsmittel (2, 7) bildet und geeignet ist, durch Reflexion in einem ersten Wellenlängenband gelesen zu werden;
- eine wellenselektive Lackschicht (5), die in dem sichtbaren Spektrum undurchsichtig ist, und die bedruckte Zone, die das Identifikationsmittel (2, 7) bildet, bedeckt, wobei die besagte wellenselektive Lackschicht ein Transmissionsfenster im unsichtbaren Bereich bildet, welches das besagte erste Wellenlängenband enthält; und
- eine reflektive, transparente, geprägte Schicht (4), die eine diffraktive, optische Markierung bildet welche die Lackschicht bedeckt, wobei das Authentifikationsmittel durch die besagte reflektive, transparente und geprägte Schicht (4) gebildet wird.

6. Mittel zur Markierung und Sicherung eines Produktes oder Dokumentes, **dadurch gekennzeichnet, dass** besagtes Mittel aus einer mehrschichtigen Einheit (3) besteht, die eine erste reflektive, transparente und geprägte Schicht (4) enthält, die ein Authentifikationsmittel bildet, und eine zweite Schicht unterhalb der genannten ersten Schicht, wobei die zweite Schicht eine wellenlängenselektive, im sichtbaren Spektrum undurchsichtige Lackschicht (5) ist, durch die im unsichtbaren Bereich ein schmales Magnetband verläuft, sowie eine dritte Schicht unter der zweiten Schicht, und dass die genannte dritte Schicht eine bedruckte Zone enthält, die ein Identifikationsmittel (7) bildet.

7. Mittel zur Markierung und Sicherung eines Produkts nach Anspruch 6, **dadurch gekennzeichnet, dass** es außerdem eine untere, selbstklebende Schicht (6) aufweist, durch die ein nicht rückgängig zu machendes Aufkleben auf das zu markierende Produkt ermöglicht wird.

8. Mittel zur Markierung und Sicherung eines Produktes nach einem der Ansprüche 6 oder 7, **dadurch gekennzeichnet, dass** es außerdem umfasst:
- eine obere Schicht, die durch einen transparenten Trägerfilm (25) gebildet wird;
- eine Abtrennschicht (26), mit der der Trägerfilm (25) von dem aktiven Teil getrennt werden kann;
- ein transparenter Schutzlack (27) auf dem gesamten Spektrum, der die reflektive Schicht (4) bedeckt.

9. Mittel zur Markierung und Sicherung eines Produktes nach Anspruch 8, **dadurch gekennzeichnet, dass** die Abtrennschicht (26) nicht homogen ist und Bereiche mit hohem Haftvermögen sowie Bereiche mit geringem Haftvermögen aufweist.

10. Mittel zur Markierung und Sicherung eines Produktes nach einem der Ansprüche 6 bis 8, **dadurch gekennzeichnet, dass** es in Form eines mehrschichtigen Bandes (3) ausgeführt ist, das kontinuierlich durch Abrollen von einer Rolle und Aufkleben auf das zu markierende Produkt oder durch Thermoverfahren aufgetragen werden kann.

11. Mittel zur Markierung und Sicherung eines Produktes nach einem der Ansprüche 6 bis 8, **dadurch gekennzeichnet, dass** es in Form eines Fadens ausgeführt ist, der geeignet ist, durch Weben oder Kleben in das Papier eingefügt zu werden.

12. Vorrichtung zur Prüfung eines entsprechend dem Verfahren markierten Produktes nach einem der Ansprüche 1 bis 4, **dadurch gekennzeichnet, dass** die Vorrichtung mit einer Reihe von Lichtquellen bestückt ist, die den optischen Verbund durch einen oder mehrere Lichteintritte beleuchten, mit einem CCD-Element oder einer Reihe von Punktempfängern, um die Reaktion des Authentifikationsmittels zu analysieren, mit einer Leuchtquelle, die im Magnetband der wellenlängenselektiven Lackschicht (5) funktioniert, welche das Identifikations-mittel (2, 7) und das Authentifikationsmittel trennt, mit einem Mittel zum Lesen des Identifikationsmittels (2, 7) und mit einem Rechner zur Signalverwertung.

13. Vorrichtung zur Prüfung eines markierten Produktes nach Anspruch 12, **dadurch gekennzeichnet, dass** sie ein Beleuchtungsmittel enthält, welches sich aus einer Vielzahl von Leuchtquellen zusammensetzt, die mindestens in zwei unterschiedlichen Winkeln zum Einfallslot des Chips geneigt sind.

## Claims

1. A method for marking products or documents consisting of affixing on a substrate (1) a multilayer optical complex which is indissociable without it being destroyed, said multilayer complex including an authentication means formed by a diffracting optical marker and an identification means (2, 7), **characterized in that** both means are separated by a layer of colored wavelength selective varnish (5) letting through a narrow band-pass in the invisible spectrum, this layer of selective varnish (5) being opaque in the visible spectrum.

2. The method for marking products or documents according to claim 1, **characterized in that** the identification means (2) is printed on the substrate (1), **in that** the thereby printed area is covered in such a way that it is indissociable without it being destroyed, with a multilayer set (3) comprising the layer of wavelength selective varnish (5) forming a lower layer letting through at least a narrow wavelength range for illuminating the identification means (2) and a transparent reflective layer (4) forming the diffracting optical marker.

3. The method for marking products or documents according to claim 1, **characterized in that** a multilayer set comprising a lower layer (28) bearing a printed area forming the identification means (7) is fixed on the substrate (1) in such a way that it is indissociable without it being destroyed, the layer of wavelength selective varnish (5) at least letting through a narrow wavelength range for illuminating the identification means (7) and a transparent reflective layer (4) forming the diffracting optical marker.

4. The marking method according to any of claims 2 to 3, **characterized in that** the layer of wavelength selective varnish (5) is transparent in the infrared light range and **in that** the identification means (2, 7) is determined so as to be correlated with the diffraction pattern formed by the transparent reflective layer (4).

5. A secure document including an identification means and an authentication means, **characterized in that** the document has, in a superposition that is indissociable without it being destroyed:
- a printed area forming the identification means (2, 7) able to be read by reflection in a first wavelength range;
- a layer of wavelength selective varnish (5), opaque in the visible spectrum, covering the printed area forming the identification means (2, 7), said layer of wavelength selective varnish (5) having a transmission window in the invisible spectrum comprising said wavelength range; and
- a stamped transparent reflective layer (4), forming a diffracting optical marker covering the layer of varnish, the authentication means being formed by said stamped transparent reflective layer (4).

6. A means for marking a product or a document and providing security thereto, **characterized in that** said means is formed by a multilayer set (3) comprising a first stamped transparent reflective layer (4) forming an authentication means, and a second layer lower than said first layer, said second layer being a layer of wavelength selective varnish (5) opaque in the visible spectrum, letting through a narrow band-pass in the invisible spectrum and a third layer, lower than the second layer, said third layer bearing a printed area forming an identification means (7).

7. The means for marking a product and providing security thereto according to claim 6, **characterized in that** it further includes a lower adhesive layer (6) for irreversible sticking on the product to be marked.

8. The means for marking a product and providing security thereto according to any of claims 6 or 7, **characterized in that** it further includes:
- an upper layer formed by a transparent support film (25) ;
- a release layer (26) for separating the support film (25) from the active portion;
- a protection varnish (27) transparent over the whole of the spectrum, covering the reflective layer (4).

9. The means for marking a product and providing security thereto according to claim 8, **characterized in that** the release layer (26) is inhomogeneous and has areas with high adhesive power and areas with low adhesive power.

10. The means for marking a product and providing security thereto according to any of claims 6 to 8, **characterized in that** it is produced as a multilayer strip (3) able to be continuously deposited by the unwinding of a spool and by affixing it on the product to be marked by sticking it on or by hot transfer.

11. The means for marking a product and providing security thereto according to any of claims 6 to 8, **characterized in that** it is produced as a wire able to be inserted in the paper by weaving it or by sticking it.

12. A device for checking a product marked in accordance to the method according to any of claims 1 to 4, **characterized in that** the device includes a series of light sources illuminating the optical complex according to one or more incidences, a CCD strip or a series of point-like receivers for analyzing the response of the authentication means, an illumination source operating in the band-pass of the layer of wavelength selective varnish (5) separating the identification means (2, 7) and the authentication means, a means for reading the identification means (2, 7) and a computer for processing the signals.

13. The device for checking a product marked according to claim 12, **characterized in that** it includes an illumination means formed by a plurality of light sources inclined according to at least two different angles with respect to the normal of the substrate.
